# EUROPÄISCHE PATENTANMELDUNG

(11) **EP 3 088 904 A1**
(43) Veröffentlichungstag der Anmeldung: **02.11.2016**
(21) Anmeldenummer: 15165186.6
(22) Anmeldetag: 27.04.2015
(51) Int. Cl.: G01N 35/10

(54) **VERFAHREN ZUR ÜBERPRÜFUNG DER FUNKTIONSFÄHIGKEIT EINER WASCHSTATION FÜR PIPETTIERNADELN**

(71) Anmelder: Siemens Healthcare Diagnostics Products GmbH, 35041 Marburg (DE)
(72) Erfinder: Bouteffah-Touiki, Ayoub, 60431 Frankfurt (DE); Michels, Thorsten, 64521 Gross-Gerau (DE)

(57) **Zusammenfassung**

Die vorliegende Erfindung liegt auf dem Gebiet der automatischen Analysegeräte und betrifft ein Verfahren zur Überprüfung der Funktionsfähigkeit einer Waschstation (1) für Pipettiernadeln (2).

## Beschreibung

Die vorliegende Erfindung liegt auf dem Gebiet der automatischen Analysegeräte und betrifft ein Verfahren zur Überprüfung der Funktionsfähigkeit einer Waschstation für Pipettiernadeln.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Der Transfer von Probenflüssigkeiten oder von Reagenzflüssigkeiten erfolgt üblicherweise mit automatischen Pipettiervorrichtungen. Solche Pipettiervorrichtungen umfassen in der Regel eine senkrecht an einem verfahrbaren Transferarm angeordnete und höhenverstellbare Pipettiernadel, die mit einer Pumpeinheit verbunden ist, so dass mit der Pipettiernadel ein gewünschtes Volumen einer Flüssigkeit aus einem Behälter entnommen und an einem anderen Ort in einen Zielbehälter abgegeben werden kann. Üblicherweise wird die Pipettiernadel mit Hilfe des Transferarms an eine Position über einem Flüssigkeitsbehälter verfahren und dann in den Flüssigkeitsbehälter und die darin enthaltene Flüssigkeit abgesenkt. Nach Entnahme des gewünschten Volumens wird die Pipettiernadel nach oben gefahren und dann mit Hilfe des horizontal verfahrbaren Transferarms an die gewünschte Zielposition über einem Flüssigkeitsbehälter gefahren, beispielsweise über eine Messzelle. Dort wird die Pipettiernadel wieder abgesenkt, und die Flüssigkeitsmenge wird abgegeben.

Es ist üblich, Pipettiervorrichtungen mit einem Füllstandsensor auszustatten. Dies hat einerseits den Zweck, dass während des Betriebs des automatischen Analysegeräts der Füllstand von Reagenzflüssigkeiten in Reagenzflüssigkeitsbehältern bestimmt werden und an die Steuereinheit gemeldet werden kann. Dadurch wird beispielsweise sichergestellt, dass ein Benutzer rechtzeitig über einen notwendigen Reagenzbehälteraustausch informiert werden kann. Andererseits stellt die Füllstandbestimmung sicher, dass die Pipettiernadel immer ausreichend tief in die zu entnehmende Flüssigkeit eingetaucht wird, um zu vermeiden, dass Luft anstelle von Flüssigkeit angesaugt wird.

Die gängigste Methode zur Füllstandbestimmung ist die kapazitive Füllstandbestimmung. Dazu besteht die Pipettiernadel aus einem elektrisch leitfähigen Material und bildet damit im Grunde die Messelektrode, und sie umfasst ferner eine Referenzelektrode. Aus der Änderung der elektrischen Kapazität zwischen der Pipettiernadel und der Referenzelektrode kann die Füllhöhe kontuierlich bestimmt werden. Eine andere Methode ist die optische Füllstandbestimmung. Dazu umfasst die Pipettiernadel einen optoelektronischen Füllstandsensor bestehend aus einer Lichtquelle und einem Lichtsensor. Beim Eintauchen wird das Licht durch die Flüssigkeit gebrochen und erreicht nicht mehr oder nur abgeschwächt den Lichtsensor. Aus der Abschwächung des Lichtssignals kann die Füllhöhe bestimmt werden.

Nach jedem Pipettieren von Proben- oder Reagenzflüssigkeit müssen die Pipettiernadelspitzen gereinigt werden, bevor sie für die Verarbeitung weiterer Reagenzien oder Proben benutzt werden können. Für die Reinigung von Pipettiernadelspitzen sind spezielle Waschstationen in einem Analysegerät vorgesehen. Gängige Waschstationen setzen sich aus einem inneren, mit einer Waschflüssigkeit gefüllten oder befüllbaren Waschbrunnenzylinder und einem äußeren Überlaufzylinder zusammen. Die Pipettiernadelspitze wird zur Reinigung in den Waschbrunnenzylinder abgesenkt und in die Waschflüssigkeit eingetaucht. Um den Reinigungsvorgang zu optimieren, wird in einigen System die Waschflüssigkeit mit hoher Strömungsgeschwindigkeit durch Düsen in den Waschbrunnenzylinder gespritzt. Damit auch das Innere der Pipettiernadelspitze gereinigt wird, wird in manchen Systemen Waschflüssigkeit eingesaugt und wieder abgegeben. In anderen Systemen verfügt die Pumpvorrichtung der Pipettiervorrichtung über eine direkte Versorgung mit Waschflüssigkeit, so dass die Waschflüssigkeit durch die gesamte Pipettiernadel gepumpt und schließlich in den Waschbrunnenzylinder abgegeben wird. Der den Waschbrunnenzylinder umlaufende, äußere Überlaufzylinder ist dazu vorgesehen, Waschflüssigkeit aufzufangen, die über den Rand des Waschbrunnenzylinders tritt. Am Überlaufzylinder ist üblicherweise ein Abfluss vorgesehen, durch den die aufgefangene Waschflüssigkeit aus der Waschstation abfließen oder abgesaugt werden kann. Eine derartige Waschstation für für eine Pipettiernadel ist z.B. in der WO-A1-97/03766 beschrieben.

Problematisch ist, dass es beispielsweise zu Verstopfungen des Abflusses kommen kann, wodurch im schlimmsten Falle die Waschstation überläuft und Waschflüssigkeit in das Analysegerät gelangen und dadurch schwerwiegende Schäden verursachen kann. Auch andere Funktionsstörungen, wie beispielsweise eine unkontrollierte Befüllung mit Waschflüssigkeit oder ein Ausfall einer Absaugvorrichtung können ein Überlaufen einer Waschstation verursachen.

Es ist daher erforderlich Maßnahmen zu ergreifen, die die Gefahr des Überlaufens einer Waschstation frühzeitig erkennen und anzeigen.

Der vorliegenden Erfindung liegt daher die Aufgabe zugrunde, ein Verfahren bereit zu stellen, das die Überprüfung der Funktionsfähigkeit einer Waschstation für Pipettiernadeln in einem automatischen Analysegerät ermöglicht.

Die Aufgabe wird dadurch gelöst, dass beim Absenken einer Pipettiernadel in die Waschstation der Füllstand der Waschflüssigkeit mit Hilfe des Füllstandsensors gemessen wird.

Dies hat den Vorteil, dass ein Überlaufen der Waschstation frühzeitig erkannt wird und Maßnahmen ergriffen werden können, um drohende Schäden am Analysegerät zu vermeiden. Besonders vorteilhaft ist, dass das Verfahren in jedem Analysegerät, das bereits über eine Pipettiervorrichtung mit einem Füllstandsensor verfügt, ohne konstruktive Änderungen des Analysegeräts durchgeführt werden kann. Es ist lediglich erforderlich, die Steuereinheit so zu konfigurieren, dass die Messung des Füllstands auch in der Waschstation erfolgt und entsprechend ausgewertet wird. Auf eine Anbringung eines Füllstandsensors an der Waschstation selbst kann verzichtet werden.

Gegenstand der vorliegenden Erfindung ist daher die neuartige Verwendung einer Pipettiernadel mit einem Füllstandsensor zur Überprüfung der Funktionsfähigkeit einer Waschstation für eine Pipettiernadel in einem automatischen Analysegerät.

Die Erfindung betrifft ein Verfahren zur Überprüfung der Funktionsfähigkeit einer Waschstation für eine Pipettiernadel in einem automatischen Analysegerät, wobei die Waschstation einen inneren, mit einer Waschflüssigkeit gefüllten Waschbrunnenzylinder mit einer Öffnung zur Aufnahme einer Pipettiernadelspitze und einen äußeren Überlaufzylinder aufweist, der den Waschbrunnenzylinder umläuft und diesen an Höhe überragt und wobei die Pipettiernadel einen Füllstandsensor aufweist. Das Verfahren umfasst die Schritte:
a. Absenken der Pipettiernadel, so dass die Pipettiernadelspitze in den Waschbrunnenzylinder eingeführt wird;
b. Messen des Füllstandes der Waschflüssigkeit in der Waschstation mit dem Füllstandsensor; und
c. Vergleichen des gemessenen Füllstandes mit einem ersten Grenzwert, der der Höhe des Waschbrunnenzylinders entspricht.

Wird auf diese Weise ein Füllstand gemessen, der oberhalb des ersten Grenzwertes liegt, bedeutet dies, dass sich im Überlaufzylinder bereits so viel Waschflüssigkeit angesammelt hat, dass bei weiterer Zufuhr von Waschflüssigkeit ein Überlaufen der Waschstation droht.

Bevorzugterweise wird daher -wenn der gemessene Füllstand oberhalb des ersten Grenzwertes liegt- eine Fehlermeldung generiert und/oder die Zufuhr von Waschflüssigkeit in den Waschbrunnenzylinder wird gestoppt.

Die Fehlermeldung dient der Information eines Benutzers des automatischen Analysegeräts über die Funktionsstörung der Waschstation. Dies ermöglicht das frühzeitige Ergreifen erforderlicher Maßnahmen zur Behebung der Funktionsstörung durch den Benutzer.

Die Fehlermeldung kann in Form einer Textnachricht oder in Form eines Piktogramms auf einem Bildschirm des automatischen Analysegeräts angezeigt werden. Alternativ oder zusätzlich kann die Fehlermeldung auch in Form eines akustischen Signals von einem Lautsprecher des automatischen Analysegeräts abgegeben werden. Außerdem kann die Fehlermeldung auch in Form eines visuellen Signals von einer Warnlampe des automatischen Analysegeräts abgegeben werden. Selbstverständlich können die verschiedenen Möglichkeiten zur Meldung eines Fehlers beliebig miteinander kombiniert werden.

Vorzugsweise wird die Zufuhr von Waschflüssigkeit in den Waschbrunnenzylinder automatisch gestoppt. Dazu wird -wenn der gemessene Füllstand oberhalb des ersten Grenzwertes liegt- von der Steuereinheit ein entsprechendes Steuersignal an die Vorrichtung, die die Waschstation mit Waschflüssigkeit befüllt, wie beispielsweise eine Pumpe gesendet.

In einer bevorzugten Ausführungsform des erfindungsgemäßen Verfahrens wird der gemessene Füllstand mit einem zweiten Grenzwert verglichen, der einem minimal erforderlichen Füllstand der Waschflüssigkeit in dem Waschbrunnenzylinder entspricht.

Wird auf diese Weise ein Füllstand gemessen, der unterhalb des zweiten Grenzwertes liegt, bedeutet dies, dass sich im Waschzylinder nicht genügend Waschflüssigkeit befindet, um eine hinreichende Reinigung der Pipettiernadelspitze zu gewährleisten.

Der zweite Grenzwert ist demnach so gewählt, dass er unterhalb der Höhe des Waschbrunnenzylinders liegt, aber eine Mindesthöhe des Füllstandes der Waschflüssigkeit in dem Waschbrunnenzylinder angibt, die für eine hinreichende Reinigung der Pipettiernadelspitze erforderlich ist.

Bevorzugterweise wird daher -wenn der gemessene Füllstand unterhalb des zweiten Grenzwertes liegt- eine Fehlermeldung generiert und/oder die Verwendung der Pipettiernadel zum Pipettieren von Reagenz- und oder Probenflüssigkeit wird gestoppt.

Die Fehlermeldung kann auf verschiedene Art und Weise, wie bereits weiter oben beschrieben, angezeigt oder abgegeben werden.

Vorzugsweise wird die Verwendung der Pipettiernadel zum Pipettieren von Reagenz- und oder Probenflüssigkeit automatisch gestoppt. Dazu wird -wenn der gemessene Füllstand unterhalb des zweiten Grenzwertes liegt- von der Steuereinheit ein entsprechendes Steuersignal z.B. an den automatisch verfahrbaren Transferarm, an dem die Pipettiernadel angebracht ist, gesendet, und jede weitere Bewegung des Transferarms und damit der Pipettiernadel wird unterbunden.

In einer bevorzugten Ausführungsform des erfindungsgemäßen Verfahrens erfolgt die Messung des Füllstands der Waschlösung in der Waschstation kapazitiv. Dazu weist die Pipettiernadel einen kapazitiven Füllstandsensor auf. Bevorzugterweise besteht die Pipettiernadel dazu aus einem elektrisch leitfähigen Material, wie z.B. aus Edelstahl, und bildet damit im Grunde die Messelektrode, und sie umfasst ferner eine Referenzelektrode.

Alternativ kann die Messung des Füllstands der Waschlösung in der Waschstation auch optisch erfolgen. Dazu weist die Pipettiernadel einen optoelektronischen Füllstandsensor auf, der mindestens eine Lichtquelle und einen Lichtsensor umfasst. Weiterhin ist jedes Messverfahren geeignet, bei dem der Füllstandsensor an der Pipettiervorrichtung bzw. an der Pipettiernadel angeordnet ist und mit dieser im Analysegerät verfahrbar ist.

Ein weiterer Gegenstand der vorliegenden Erfindung ist ein automatisches Analysegerät mit mindestens einer automatisch verfahrbaren Pipettiervorrichtung, die eine Pipettiernadel mit einem Füllstandsensor umfasst, und mit mindestens einer Waschstation für die Pipettiernadel, wobei die Waschstation einen inneren, mit einer Waschflüssigkeit gefüllten Waschbrunnenzylinder mit einer Öffnung zur Aufnahme einer Pipettiernadelspitze und einen äußeren Überlaufzylinder aufweist, der den Waschbrunnenzylinder umläuft und diesen an Höhe überragt. Das erfindungsgemäße Analysegerät weist ferner eine Steuerung auf, die so konfiguriert ist, dass sie ein Verfahren mit den folgenden Schritten steuert:
a. Absenken der Pipettiernadel, so dass die Pipettiernadelspitze in den Waschbrunnenzylinder eingeführt wird;
b. Messen des Füllstandes der Waschflüssigkeit in der Waschstation mit dem Füllstandsensor; und
c. Vergleichen des gemessenen Füllstandes mit einem ersten Grenzwert, der der Höhe des Waschbrunnenzylinders entspricht.

Bevorzugterweise ist die Steuerung ferner so konfiguriert, dass -wenn der gemessene Füllstand oberhalb des ersten Grenzwertes liegt- eine Fehlermeldung generiert wird und/oder die Zufuhr von Waschflüssigkeit in den Waschbrunnenzylinder wird gestoppt.

In einer bevorzugten Ausführungsform des erfindungsgemäßen Analysegeräts ist die Steuerung ferner so konfiguriert, dass das Verfahren, das sie steuert, ferner den folgenden Schritt umfasst: Vergleichen des gemessenen Füllstands mit einem zweiten Grenzwert, der einem minimal erforderlichen Füllstand der Waschflüssigkeit in dem Waschbrunnenzylinder entspricht.

Bevorzugterweise ist die Steuerung ferner so konfiguriert, dass -wenn der gemessene Füllstand unterhalb des zweiten Grenzwertes liegt- eine Fehlermeldung generiert und/oder die Verwendung der Pipettiernadel zum Pipettieren von Reagenz- und oder Probenflüssigkeit gestoppt wird.

Vorzugsweise ist die Steuerung ferner so konfiguriert, dass eine Fehlermeldung in Form einer Textnachricht oder in Form eines Piktogramms auf einem Bildschirm des automatischen Analysegeräts angezeigt wird oder in Form eines akustischen Signals von einem Lautsprecher des automatischen Analysegeräts abgegeben wird oder in Form eines visuellen Signals von einer Warnlampe des automatischen Analysegeräts abgegeben wird.

In einer bevorzugten Ausführungsform des erfindungsgemäßen Analysegeräts ist der mit der Pipettiernadel verbundene Füllstandsensor ein kapazitiver Füllstandsensor. Bevorzugterweise besteht die Pipettiernadel dazu aus einem elektrisch leitfähigen Material, wie z.B. aus Edelstahl, und umfasst ferner eine Elektrode.

Alternativ kann der mit der Pipettiernadel verbundene Füllstandsensor auch ein optoelektronischer Füllstandsensor sein, der mindestens eine Lichtquelle und einen Lichtsensor umfasst.

Die Erfindung wird anhand einer Zeichnung erläutert.

### FIGURENBESCHREIBUNG

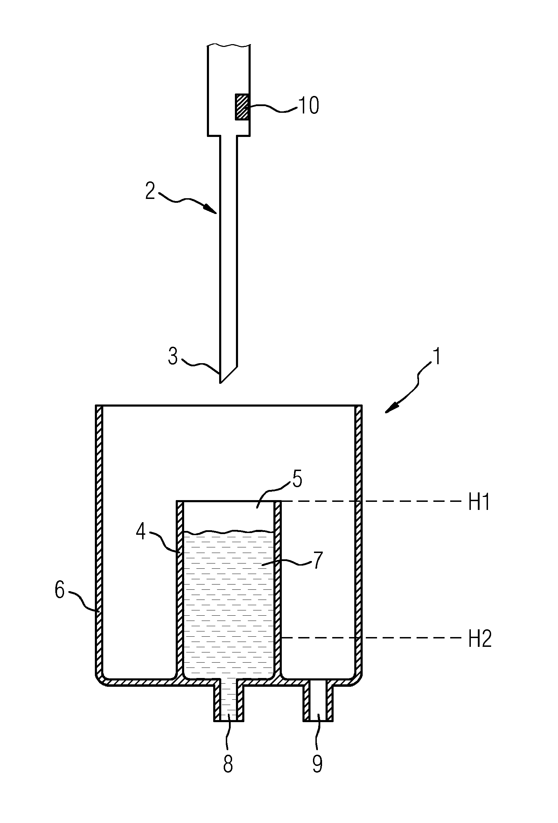

FIG. 1 zeigt eine Waschstation 1 für eine Pipettiernadel 2 in einem nicht näher dargestellten Analysegerät. Die Waschstation 1 umfasst einen inneren, mit einer Waschflüssigkeit 7 fast vollständig gefüllten Waschbrunnenzylinder 4 mit einer Öffnung 5 zur Aufnahme einer Pipettiernadelspitze 3 und einen äußeren Überlaufzylinder 6, der den Waschbrunnenzylinder 4 umläuft und diesen an Höhe überragt. Die Waschflüssigkeit 7 wird über eine Zuflussöffnung 8 aus einem Reservoir (nicht dargestellt) in den Waschbrunnenzylinder 4 gepumpt. Bei der hier gezeigten Ausführungsform ist vorgesehen, dass ein kontinuierlicher Austausch von Waschflüssigkeit 7 stattfindet, indem von unten frische Waschflüssigkeit 7 in den Waschbrunnenzylinder 4 gepumpt wird, während überschüssige Waschflüssigkeit 7 über den Rand des Waschbrunnenzylinders 4 und in den Überlaufzylinder 6 tritt. Über eine Abflussöffnung 9 im Überlaufzylinder 6 wird die gebrauchte Waschflüssigkeit 7 aus der Waschstation 1 abgepumpt.

Die Pipettiernadel 2 weist einen kapazitiven Füllstandsensor auf. Dazu besteht die Pipettiernadel 2 aus Edelstahl und dient damit als Messelektrode, und sie umfasst ferner eine Referenzelektrode 10. Befindet sich die Pipettiernadel 2 in Luft, wird eine niedrige Kapazität gemessen. Beim Eintauchen der Pipettiernadelspitze 3 in die Waschflüssigkeit 7 wird eine Kapazitätsänderung gemessen. Aus dem Absenkweg der Pipettiernadel 2 bis zur Kapazitätsänderung wird der Füllstand der Waschflüssigkeit 7 berechnet.

Zum Reinigen der Pipettiernadelspitze 3 wird die Pipettiernadel 2 über dem Waschbrunnenzylinder 4 soweit abgesenkt, dass die Pipettiernadelspitze 3 so tief in die Waschflüssigkeit 7 eintaucht, wie es für eine hinreichend gründliche Reinigung mindestens erforderlich ist. Bei der hier gezeigten Ausführungsform ist eine Mindestfüllstandhöhe vorgesehen, die durch einen Grenzwert H2 festgelegt ist. Detektiert der Füllstandsensor eine Füllstandhöhe die unterhalb des Grenzwertes H2 liegt, bedeutet dies, dass sich im Waschzylinder 4 nicht genügend Waschflüssigkeit 7 befindet, so dass eine hinreichende Reinigung der Pipettiernadelspitze 3 nicht gewährleistet ist.

Ferner ist bei der hier gezeigten Ausführungsform eine maximale Füllstandhöhe vorgesehen, die durch einen Grenzwert H1 festgelegt ist. Der Grenzwert H1 entspricht der Höhe des Waschbrunnenzylinders 4. Detektiert der Füllstandsensor eine Füllstandhöhe die oberhalb des Grenzwertes H1 liegt, bedeutet dies, dass sich im Überlaufzylinder 6 bereits so viel Waschflüssigkeit 7 angesammelt hat, dass bei weiterer Zufuhr von Waschflüssigkeit 7 ein Überlaufen der Waschstation 1 droht.

### BEZUGSZEICHENLISTE

- 1: Waschstation
- 2: Pipettiernadel
- 3: Pipettiernadelspitze
- 4: Waschbrunnenzylinder
- 5: Öffnung
- 6: Überlaufzylinder
- 7: Waschflüssigkeit
- 8: Zuflussöffnung
- 9: Abflussöffnung
- 10: Referenzelektrode

- H1: erster Grenzwert für maximale Füllstandhöhe
- H2: zweiter Grenzwert für Mindestfüllstandhöhe

## Patentansprüche

1. Verfahren zur Überprüfung der Funktionsfähigkeit einer Waschstation (1) für eine Pipettiernadel (2) in einem automatischen Analysegerät, wobei die Waschstation (1) einen inneren, mit einer Waschflüssigkeit (7) gefüllten Waschbrunnenzylinder (4) mit einer Öffnung (5) zur Aufnahme einer Pipettiernadelspitze (3) und einen äußeren Überlaufzylinder (6) aufweist, der den Waschbrunnenzylinder (4) umläuft und diesen an Höhe überragt und wobei die Pipettiernadel (2) einen Füllstandsensor aufweist, das Verfahren umfassend die Schritte
a. Absenken der Pipettiernadel (2), so dass die Pipettiernadelspitze (3) in den Waschbrunnenzylinder (4) eingeführt wird;
b. Messen des Füllstandes der Waschflüssigkeit (7) in der Waschstation (1) mit dem Füllstandsensor; und
c. Vergleichen des gemessenen Füllstandes mit einem ersten Grenzwert (H1), der der Höhe des Waschbrunnenzylinders (4) entspricht.

2. Verfahren gemäß Anspruch 1, wobei -wenn der gemessene Füllstand oberhalb des ersten Grenzwertes (H1) liegteine Fehlermeldung generiert wird.

3. Verfahren gemäß einem der Ansprüche 1 und 2, ferner umfassend den Schritt
d. Stoppen der Zufuhr von Waschflüssigkeit (7) in den Waschbrunnenzylinder (4).

4. Verfahren gemäß einem der Ansprüche 1 und 2, ferner umfassend den Schritt
e. Vergleichen des gemessenen Füllstands mit einem zweiten Grenzwert (H2), der einem minimal erforderlichen Füllstand der Waschflüssigkeit (7) in dem Waschbrunnenzylinder (4) entspricht.

5. Verfahren gemäß Anspruch 4, wobei -wenn der gemessene Füllstand unterhalb des zweiten Grenzwertes (H2) liegteine Fehlermeldung generiert wird.

6. Verfahren gemäß einem der Ansprüche 2 und 5, wobei die Fehlermeldung in Form einer Textnachricht oder in Form eines Piktogramms auf einem Bildschirm des automatischen Analysegeräts angezeigt wird oder in Form eines akustischen Signals von einem Lautsprecher des automatischen Analysegeräts oder in Form eines visuellen Signals von einer Warnlampe des automatischen Analysegeräts abgegeben wird.

7. Verfahren gemäß einem der vorhergehenden Ansprüche, wobei die Pipettiernadel (2) einen kapazitiven Füllstandsensor aufweist und der Füllstand kapazitiv gemessen wird.

8. Verwendung einer Pipettiernadel (2) mit einem Füllstandsensor zur Überprüfung der Funktionsfähigkeit einer Waschstation (1) für eine Pipettiernadel (2) in einem automatischen Analysegerät.

9. Automatisches Analysegerät mit mindestens einer automatisch verfahrbaren Pipettiervorrichtung, die eine Pipettiernadel (2) mit einem Füllstandsensor umfasst, und mit mindestens einer Waschstation (1) für die Pipettiernadel (2), wobei die Waschstation (1) einen inneren, mit einer Waschflüssigkeit (7) gefüllten Waschbrunnenzylinder (4) mit einer Öffnung (5) zur Aufnahme einer Pipettiernadelspitze (3) und einen äußeren Überlaufzylinder (6) aufweist, der den Waschbrunnenzylinder (4) umläuft und diesen an Höhe überragt, **dadurch gekennzeichnet, dass** das automatische Analysegerät ferner eine Steuerung aufweist, die so konfiguriert ist, dass sie ein Verfahren mit den folgenden Schritten steuert:
a. Absenken der Pipettiernadel (2), so dass die Pipettiernadelspitze (3) in den Waschbrunnenzylinder (4) eingeführt wird;
b. Messen des Füllstandes der Waschflüssigkeit (7) in der Waschstation (1) mit dem Füllstandsensor; und
c. Vergleichen des gemessenen Füllstandes mit einem ersten Grenzwert (H1), der der Höhe des Waschbrunnenzylinders (4) entspricht.

10. Automatisches Analysegerät gemäß Anspruch 9, das ferner einen Bildschirm und/oder einen Lautsprecher und/oder eine Warnlampe aufweist.

11. Automatisches Analysegerät gemäß einem der Ansprüche 9 und 10, wobei die Steuerung ferner so konfiguriert ist, dass -wenn der gemessene Füllstand oberhalb des ersten Grenzwertes (H1) liegt- eine Fehlermeldung generiert wird.

12. Automatisches Analysegerät gemäß Anspruch 11, wobei die Steuerung ferner so konfiguriert ist, dass das Verfahren, das sie steuert, ferner den folgenden Schritt umfasst:
d. Stoppen der Zufuhr von Waschflüssigkeit (7) in den Waschbrunnenzylinder (4).

13. Automatisches Analysegerät gemäß einem der Ansprüche 8 bis 12, wobei die Steuerung ferner so konfiguriert ist, dass das Verfahren, das sie steuert, ferner den folgenden Schritt umfasst:
e. Vergleichen des gemessenen Füllstands mit einem zweiten Grenzwert (H2), der einem minimal erforderlichen Füllstand der Waschflüssigkeit (7) in dem Waschbrunnenzylinder (4)entspricht.

14. Automatisches Analysegerät gemäß Anspruch 13, wobei die Steuerung ferner so konfiguriert ist, dass -wenn der gemessene Füllstand unterhalb des zweiten Grenzwertes (H2) liegt- eine Fehlermeldung generiert wird.

15. Automatisches Analysegerät gemäß einem der Ansprüche 11 und 14, wobei die Steuerung ferner so konfiguriert ist, dass die Fehlermeldung in Form einer Textnachricht oder in Form eines Piktogramms auf einem Bildschirm des automatischen Analysegeräts angezeigt wird oder in Form eines akustischen Signals von einem Lautsprecher des automatischen Analysegeräts oder in Form eines visuellen Signals von einer Warnlampe des automatischen Analysegeräts abgegeben wird.

16. Automatisches Analysegerät gemäß einem der Ansprüche 9-15, wobei die automatisch verfahrbare Pipettiervorrichtung eine Pipettiernadel (2) mit einem kapazitiven Füllstandsensor umfasst.
